# EUROPÄISCHE PATENTANMELDUNG

(11) **EP 2 554 856 A1**
(43) Veröffentlichungstag der Anmeldung: **06.02.2013**
(21) Anmeldenummer: 11176534.3
(22) Anmeldetag: 04.08.2011
(51) Int. Cl.: F16B 33/02

(54) **Geänderte Gewindezahngeometrie eines Innen- und Außengewindes**

(71) Anmelder: SIEMENS AKTIENGESELLSCHAFT, 80333 München (DE)
(72) Erfinder: Gierse, Kai, 40477 Düsseldorf (DE); Grunert, Georg, 45219 Essen (DE); Harks, Markus, 44879 Bochum (DE); Myschi, Oliver, 47137 Duisburg (DE); Schwarze, Marco, 44799 Bochum (DE)

(57) **Zusammenfassung**

Die Erfindung betrifft ein Gewinde (1) für eine Strömungsmaschine, insbesondere Dampfturbine, wobei das Gewinde (1) eine modifizierte Sägezahnstruktur aufweist, wobei die Gewindeflanke (3,10) gegenüber einer herkömmlichen Gewindezahnstruktur geringfügig in der Gewindeachse (2) verschoben ist dadurch Abstände zwischen der Gewindeflanke und den Tragflanken unterschiedlich ausgeführt sind.

## Beschreibung

Die Erfindung betrifft ein Gewinde, welches sich entlang einer Gewindeachse erstreckt, umfassend eine erste Gewindestruktur eines ersten Bauteils, eine zweite Gewindestruktur eines zweiten Bauteils, wobei die erste Gewindestruktur zum Eingriff in die zweite Gewindestruktur ausgebildet ist, wobei die erste Gewindestruktur und die zweite Gewindestruktur als ein Sägezahngewinde ausgeführt ist, wobei die erste Gewindestruktur eine erste Tragflanke und eine erste Gewindeflanke aufweist, wobei die zweite Gewindestruktur eine zweite Tragflanke und eine zweite Gewindeflanke aufweist, wobei die erste Tragflanke der ersten Gewindestruktur mindestens einen Abstand e₁ zur ersten Gewindeflanke aufweist, wobei die zweite Tragflanke der zweiten Gewindestruktur mindestens einen Abstand e₂ zur zweiten Gewindeflanke aufweist, wobei die erste Tragflanke und die zweite Tragflanke berührend aneinander angeordnet sind.

Schraubverbindungen, bestehend aus einer Schraube mit einem Bolzengewinde und einem Gegengewinde (Mutterngewinde), finden in einer Vielzahl von technischen Gebieten, wie dem Maschinenbau, dem Anlagenbau sowie in der Elektrotechnik, Anwendung. Sie dienen in der Regel dazu, zwei Teile miteinander zu verbinden und zu befestigen. Es gibt hierbei das eine Extrem der kleinen Schraubverbindungen, welche bei Raumtemperatur eingesetzt werden und geringe Kräfte übertragen müssen, sowie das andere Extrem der großen Schraubverbindungen, die bei hohen Temperaturen große Kräfte übertragen müssen.

Es ist bekannt, dass bei elastischen Verformungen von Gewinden einer Schraubverbindung an unterschiedlichen Kerbstellen unterschiedliche Kerbwirkzahlen vorherrschen, die die Dauerhaltbarkeit beeinflussen. Für die Dauerhaltbarkeit ist der Anfangsbereich, in dem Gewinde und Gegengewinde in Belastungsrichtung ineinandergreifen, bestimmend. Zur Reduzierung der in diesem Anfangsbereich, bei gleicher Gewindestruktur von Gewinde und Gegengewinde, auftretenden überproportionalen Belastungen kann die Form des Mutterngewindes geändert werden. Diese Formänderung besteht darin, dass der Außendurchmesser des Mutternkörpers in dem Anfangsbereich am kleinsten ist und entgegen der Belastungsrichtung monoton ansteigt. Weitere Methoden zur Entlastung des Anfangsbereichs bestehen darin, ein übergreifendes Mutterngewinde, ein aussenkendes Mutterngewindes sowie Entlastungskerben an dem Anfangsbereich vorzusehen.

Es sind Gewindestrukturen bekannt, wie beispielsweise Sägezahngewinde. Üblicherweise ist diese Form des Sägezahngewindes derart ausgebildet, dass die Gewinde am Innen- und Außengewinde die gleiche Zahngeometrie aufweisen. Mit solchen Gewinden wird die Möglichkeit geschaffen, ein erstes Bauteil mit einem zweiten Bauteil kraftschlüssig zu verbinden. Sofern das erste Bauteil einen Werkstoff aufweist, der eine unterschiedliche Festigkeit aufweist als das zweite Bauteil, kann es zu stark unterschiedlichen Auslastungsgraden zwischen den Zähnen des Innen- und Außengewindes kommen. Besonders im Hochtemperaturbereich führen große unterschiedliche mechanische Spannungen zu großen Kriechdehnungen, so dass das Gewindeteil mit einer geringeren Festigkeit deutlich eher versagen kann als das Gewindeteil mit der höheren Festigkeit.

Abhilfe wird in der Regel dadurch geschaffen, dass man eine geänderte Zahngeometrie berücksichtigt, die sowohl im Innenals auch im Außengewinde verwendet wird. Die größeren Gewindezähne führen jedoch zu größeren Gewindesteigungen und damit bei einer gleichbleibenden Gewindelänge zu weniger Gewindegängen und dadurch zu einer geringeren Gesamttragfähigkeit des Gesamtgewindes. Ziel ist es dabei meistens, eine steifere Zahngeometrie des Gewindeteils mit der geringeren Festigkeit anzustreben und gleichzeitig die Gewindesteigung nicht zu erhöhen.

Die Erfindung hat es sich zur Aufgabe gemacht ein Gewinde anzubieten, das eine Verbindung zwischen einem ersten Bauteil und einem zweiten Bauteil ermöglicht, wobei die Festigkeit des ersten Bauteils unterschiedlich ist zur Festigkeit des zweiten Bauteils.

Gelöst wird diese Aufgabe durch ein Gewinde, welches sich entlang einer Gewindeachse erstreckt, umfassend eine erste Gewindestruktur eines ersten Bauteils, eine zweite Gewindestruktur eines zweiten Bauteils, wobei die erste Gewindestruktur zum Eingriff in die zweite Gewindestruktur ausgebildet ist, wobei die erste Gewindestruktur und die zweite Gewindestruktur als ein Sägezahngewinde ausgeführt ist, wobei die erste Gewindestruktur eine erste Tragflanke und eine erste Gewindeflanke aufweist, wobei die zweite Gewindestruktur eine zweite Tragflanke und eine zweite Gewindeflanke aufweist, wobei die erste Tragflanke der ersten Gewindestruktur mindestens einen Abstand e₁ zur ersten Gewindeflanke aufweist, wobei die zweite Tragflanke der zweiten Gewindestruktur mindestens einen Abstand e₂ zur zweiten Gewindeflanke aufweist, wobei die erste Tragflanke und die zweite Tragflanke berührend aneinander angeordnet sind, wobei der Abstand e₁ < e₂ ist.

In den Unteransprüchen sind vorteilhafte Weiterbildungen angegeben.

Mit der Erfindung wird somit die Geometrie gegenüber den im Stand der Technik bekannten Zahngeometrien geändert. Im Vergleich zu bekannten Zahngeometrien wird die Gewindeflanke sozusagen in Bolzenachsrichtung geringfügig verschoben, so dass sich unterschiedliche Abstände oberhalb und unterhalb der berührenden Tragflanken ergeben.

Dadurch ist es möglich, die geometrischen Zahnsteifigkeiten am Innen- und Außengewinde so einzustellen, dass sich nach dem Aufbringen der Last gleichmäßigere Auslastungsgrade für das Innen- und Außengewinde einstellen.

In einer ersten vorteilhaften Weiterbildung ist der Abstand e₁ ca. 0,4 bis 0,8-mal so groß wie der Abstand e₂.

Die Erfindung wird anhand eines Ausführungsbeispiels nun näher erläutert.

Teile mit derselben Wirkungsweise weisen dieselben Bezugszeichen auf.

Es zeigen:
- FIG 1: eine Standard-Gewindegeometrie gemäß dem Stand der Technik,
- FIG 2: eine erfindungsgemäße Ausführungsform des Sägezahngewindes.

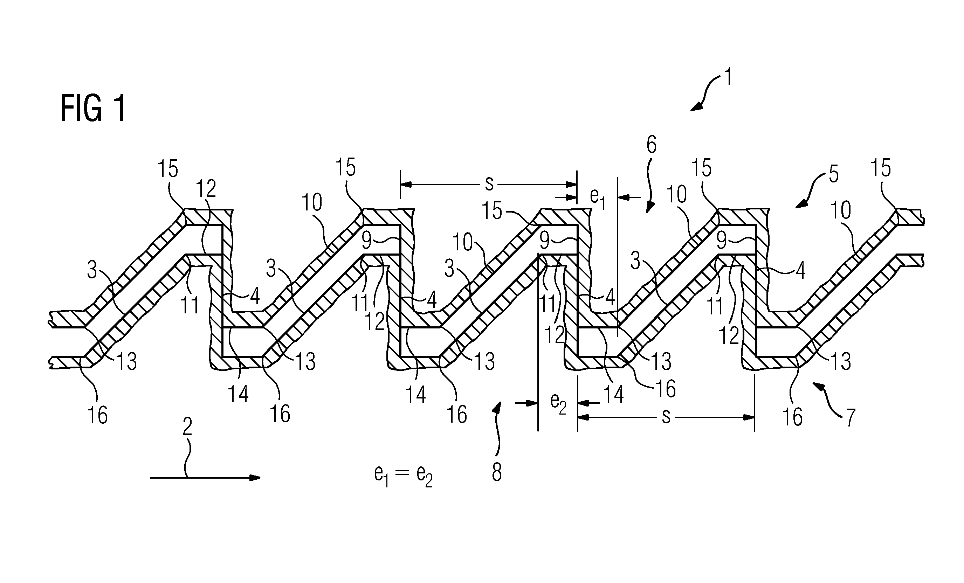

Die FIG 1 zeigt ein Gewinde 1, das als ein sogenanntes Sägezahngewinde ausgebildet ist. Ein Sägezahngewinde zeichnet sich dadurch aus, dass die Zahnform eine um ca. 45° geneigte Gewindeflanke 3 aufweist sowie eine im Wesentlichen senkrecht zu einer Gewindeachse 2 ausgeführte Tragflanke 4. Das Gewinde 1 umfasst eine erste Gewindestruktur 5 eines ersten Bauteils 6, das in eine zweite Gewindestruktur 7 eines zweiten Bauteils 8 eingreift. Die erste Gewindestruktur 5 und die zweite Gewindestruktur 7 sind als ein Sägezahngewinde ausgeführt.

Die erste Gewindestruktur 5 weist eine erste Tragflanke 9 und eine erste Gewindeflanke 10 auf. Die zweite Gewindestruktur 7 weist eine zweite Tragflanke 4 und eine Gewindeflanke 3 auf. Die erste Gewindeflanke 10 ist der zweiten Gewindeflanke 3 gegenüberliegend angeordnet. Die erste Tragflanke 9 ist an die zweite Tragflanke 4 sogar berührend aneinander geordnet. Die zweite Gewindeflanke 3 ist nicht durchgängig ausgebildet, sondern weist einen ersten Knick 11 auf, der ein Abknicken der zweiten Gewindeflanke 3 in eine zur Gewindeachse 2 parallel führenden zweiten Flanke 12 führt. Ebenso ist die erste Gewindeflanke 10 eines korrespondierenden Gewindezahns ebenfalls mit einem zweiten Knick 13 ausgebildet, der ein Abknicken der ersten Gewindeflanke 10 zu einer ersten Flanke 14 führt, die im Wesentlichen parallel zur Gewindeachse 2 ausgebildet ist. Unter der ersten Gewindeflanke 10 ist somit eine Gerade zu verstehen, die gegenüber der Gewindeachse 2 vom ersten weiteren Knick 15 bis zum zweiten Knick 13 geneigt ist. Demgegenüber ist unter der zweiten Gewindeflanke 3 eine Gerade zu verstehen, die gegenüber der Gewindeachse 2 vom ersten Knick 11 bis zum zweiten weiteren Knick 16 geneigt ist. Gemäß dem Stand der Technik ist der Sägezahn nunmehr derart ausgebildet, dass ein Abstand e₁ zwischen der ersten Tragflanke 9 und der ersten Gewindeflanke 10 genauso groß ist, wie der Abstand e₂ der zweiten Tragflanke 4 zur zweiten Gewindeflanke 3. Es gilt somit e₂ = e₁.

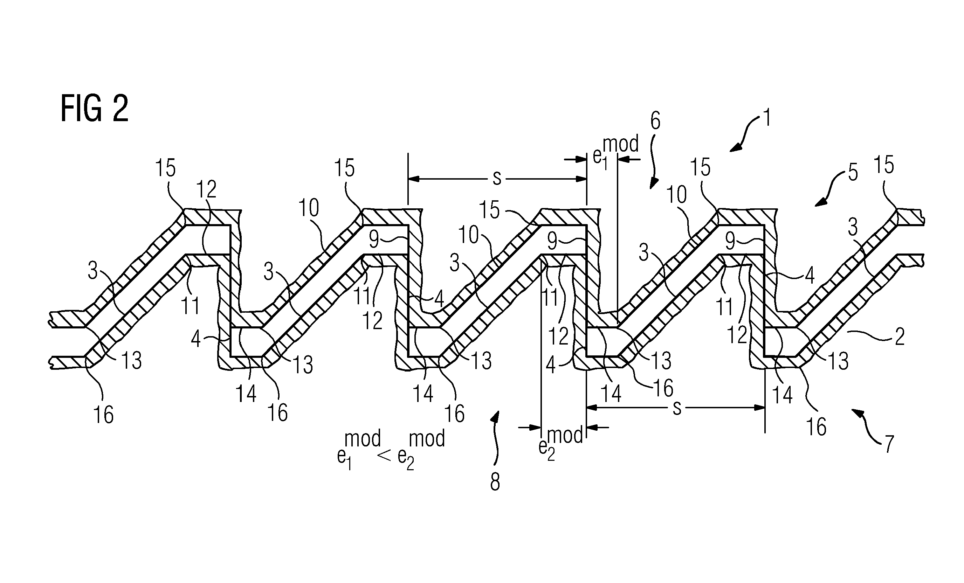

In der FIG 2 ist eine erfindungsgemäße Ausführungsform des Gewindes 1 gezeigt. Der Unterschied zum Gewinde 1 gemäß FIG 1 ist, dass der Abstand e₁, der in FIG 2 mit e₁^{mod} bezeichnet wird, kleiner ist als der Abstand e₂, der in FIG 2 mit e₂^{mod} bezeichnet ist. Somit ist die Gewindeflanke mit anderen Worten in der Gewindeachsrichtung 2 geringfügig verschoben. Ferner sind die Abstände e₁^{mod} und e₂^{mod} derart ausgebildet, dass e₁^{mod} im Wesentlichen 40% bis 80% der Länge von e₂^{mod} entspricht. Die erste Gewindeflanke 10 und die zweite Gewindeflanke 3 weisen dabei Werte zwischen 25° und 65° auf. Das Material des ersten Bauteils 6 kann von dem Material des zweiten Bauteils 8 unterschiedlich ausgebildet sein. Das erste Bauteil 6 weist eine höhere Festigkeit auf als das zweite Bauteil 8. Die Festigkeit des ersten Bauteils 6 ist somit unterschiedlich zur Festigkeit des zweiten Bauteils 8. Das Gewinde 1 ist hierbei derart ausgebildet, dass es zur Verwendung in einer Strömungsmaschine, insbesondere in einer Dampfturbine geeignet ist.

## Patentansprüche

1. Gewinde (1),
welches sich entlang einer Gewindeachse (2) erstreckt, umfassend eine erste Gewindestruktur(5) eines ersten Bauteils(6),
eine zweite Gewindestruktur (7) eines zweiten Bauteils, wobei die erste Gewindestruktur (5) zum Eingriff in die zweite Gewindestruktur (7) ausgebildet ist,
wobei die erste Gewindestruktur (5) und die zweite Gewindestruktur (7) als ein Sägezahngewinde ausgeführt sind, wobei die erste Gewindestruktur (5) eine erste Tragflanke (9) und eine erste Gewindeflanke (10) aufweist,
wobei die zweite Gewindestruktur (7) eine zweite Tragflanke (4) und eine zweite Gewindeflanke (3) aufweist,
wobei die erste Tragflanke (9) der ersten Gewindestruktur (5) mindestens einen Abstand e₁^{mod} zur ersten Gewindeflanke (10) aufweist,
wobei die zweite Tragflanke (4) der zweiten Gewindestruktur (7) mindestens einen Abstand e₂^{mod} zur zweiten Gewindeflanke (3) aufweist,
wobei die erste Tragflanke (9) und die zweite Tragflanke (4) berührend aneinander angeordnet sind,
**dadurch gekennzeichnet, dass**
der Abstand e₁^{mod} < e₂^{mod} ist.

2. Gewinde (1) nach Anspruch 1,
wobei gilt: e₁^{mod} = 40%-80% von e₂^{mod}.

3. Gewinde (1) nach Anspruch 1 oder 2,
wobei die Gewindeflanke (3, 10) zwischen 25° und 65° beträgt.

4. Gewinde (1) nach Anspruch 1, 2 oder 3,
wobei das erste Bauteil (6) eine höhere Festigkeit aufweist als das zweite Bauteil (8).

5. Gewinde (1) nach einem der vorhergehenden Ansprüche, zur Verwendung in einer Strömungsmaschine, insbesondere in einer Dampfturbine.
